(19) Europäisches Patentamt / European Patent Office / Office européen des brevets

(11) **EP 4 564 974 A1**

(12) **EUROPEAN PATENT APPLICATION**
published in accordance with Art. 153(4) EPC

(43) Date of publication:
**04.06.2025 Bulletin 2025/23**

(21) Application number: **23845997.8**

(22) Date of filing: **31.05.2023**

(51) International Patent Classification (IPC):
*H04W 72/0453* (2023.01)    *H04W 8/22* (2009.01)

(52) Cooperative Patent Classification (CPC):
**H04W 8/22; H04W 72/0453**

(86) International application number:
**PCT/JP2023/020233**

(87) International publication number:
**WO 2024/024259 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.07.2022 JP 2022121612**

(71) Applicant: **Panasonic Intellectual Property
Corporation
of America
Torrance, CA 90504 (US)**

(72) Inventors:
• **MAKI, Shotaro**
**Kadoma-shi, Osaka 571-0057 (JP)**
• **HORIUCHI, Ayako**
**Kadoma-shi, Osaka 571-0057 (JP)**
• **TRAN, Xuan Tuong**
**Singapore 469332 (SG)**
• **SUZUKI, Hidetoshi**
**Kadoma-shi, Osaka 571-0057 (JP)**

(74) Representative: **Grünecker Patent- und
Rechtsanwälte
PartG mbB
Leopoldstraße 4
80802 München (DE)**

(54) **TERMINAL, BASE STATION, AND COMMUNICATION METHOD**

(57)    According to the present embodiment, a terminal comprises: a control circuit that specifies a second resource having a frequency allocation size different from the frequency allocation size of a first resource scheduled by a control signal; and a communication circuit that receives or transmits a signal by using the second resource.

200

FIG. 2

## Description

Technical Field

The present disclosure relates to a terminal, a base station, and a communication method.

Background Art

A communication system called the 5th generation mobile communication system (5G) has been studied. The 3rd Generation Partnership Project (3GPP), which is an international standards-developing organization, has been studying development of the 5G communication system in terms of both the development of LTE/LTE-Advanced systems and a New Radio Access Technology (also referred to as New RAT or NR), which is a new method not necessarily backward compatible with the LTE/LTE-Advanced systems (see, e.g., Non Patent Literature (hereinafter referred to as "NPL") 1).

Citation List

Non-Patent Literature

NPL 1
RP-181726, "Revised WID on New Radio Access Technology", NTT DOCOMO, September 2018
NPL 2
RP-213661, "New SID on Study on further NR RedCap UE complexity reduction", Ericsson, December 2021
NPL 3
3GPP TS 38.214 V17.2.0, "NR; Physical layer procedures for control (Release 17)", 2022-06

Summary of Invention

However, there is room for further study on a method for enhancing reception performance in a terminal.
A non-limiting embodiment of the present disclosure facilitates providing a terminal, a base station, and a communication method each capable of enhancing reception performance in a terminal.
A terminal according to an embodiment of the present disclosure includes: control circuitry, which, in operation, identifies a certain resource having a frequency allocation size different from a frequency allocation size of a first resource scheduled by a control signal, the certain resource being referred to as a second resource; and communication circuitry, which, in operation, receives or transmits a signal using the second resource.
It should be noted that general or specific embodiments may be implemented as a system, an apparatus, a method, an integrated circuit, a computer program, a storage medium, or any selective combination thereof.
According to an exemplary embodiment of the present disclosure, reception performance in a terminal can be enhanced.
Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1 is a block diagram illustrating an exemplary configuration of a part of a base station;
FIG. 2 is a block diagram illustrating an exemplary configuration of a part of a terminal;
FIG. 3 is a block diagram illustrating an exemplary configuration of the base station;
FIG. 4 is a block diagram illustrating an exemplary configuration of the terminal;
FIG. 5 is a sequence diagram illustrating an exemplary operation of the base station and the terminal;
FIG. 6 illustrates an exemplary architecture for a 3GPP NR system;
FIG. 7 illustrates functional split between NG-RAN and 5GC;
FIG. 8 is a sequence diagram of a Radio Resource Control (RRC) connection setup/reconfiguration procedure;

FIG. 9 is a schematic diagram illustrating usage scenarios of enhanced Mobile BroadBand (eMBB), massive Machine Type Communications (mMTC), and Ultra Reliable and Low Latency Communications (URLLC); and

FIG. 10 is a block diagram illustrating an exemplary 5G system architecture for a non-roaming scenario.

Description of Embodiments

Hereinafter, embodiments of the present disclosure will be described in detail with reference to the accompanying drawings.

Note that, in the following description, a radio frame, a slot, and a symbol are, for example, each a physical resource unit in a time domain, for example. For example, the length of one frame may be 10 milliseconds. For example, one frame may be configured by a plurality (e.g., 10, 20, or another value) of slots. Further, for example, the number of slots configuring one frame may be variable depending on the slot length. Furthermore, for example, one slot may be configured by a plurality (e.g., 14 or 12) of symbols. For example, one symbol is the smallest physical resource unit in the time domain, and the symbol length may vary depending on the subcarrier spacing (SCS).

Further, a subcarrier and a resource block (RB) are each a physical resource unit in a frequency domain. For example, one resource block may be configured by 12 subcarriers. For example, one subcarrier may be the smallest physical resource unit in the frequency domain. The subcarrier spacing is variable, and may be 15 kHz, 30 kHz, 60 kHz, 120 kHz, 240 kHz, 480 kHz, and 960 kHz or another value, for example.

[Regarding evolved Reduced Capability NR Devices]

In Release 18 NR (hereinafter, also referred to as Rel-18 NR), a specification is expected to be formulated for realizing a terminal (e.g., also referred to as evolved Reduced Capability NR Device, eRedCap, eRedCap terminal) that reduces power consumption or cost by limiting some characteristics or performance as compared with Release 15, 16 and 17 (hereinafter, also referred to as Rel-15/16/17) and supports various use cases (e.g., see, NPL 2).

For example, Rel-18 NR is expected to support a terminal (e.g., mobile station or user equipment (UE)) called an eRedCap NR device, which operates in Frequency Range 1 (frequency band of 6 GHz band or less, also referred to as FR1 or sub-6).

The eRedCap terminal aims to reduce manufacturing costs, for example, by limiting supported characteristics (e.g., capabilities). The characteristics related to the frequency allocation size that may be supported by the eRedCap terminal include, for example, the following:

- The maximum value of the frequency bandwidth used for transmission and reception is 5 MHz,
- The maximum number of RBs of which the subcarrier spacing (SCS) used for transmission and reception is 15 kHz is 25, or
- The maximum number of RBs of which the SCS used for transmission and reception is 30 kHz is 11.

Here, a terminal that supports Rel-15/16/17 and a terminal that supports Rel-18 and of which the maximum value of the frequency bandwidth or the number of RBs is greater than the capability of an eRedCap terminal are referred to as a "non-eRedCap terminal." For example, a Rel-17 RedCap terminal is also included in the non-eRedCap terminal.

For example, it has been considered for the eRedCap terminal to limit the frequency allocation size of a downlink data channel (e.g., Physical Downlink Shared Channel (PDSCH) or an uplink data channel (e.g., Physical Uplink Shared Channel (PUSCH)) depending on the characteristic of an eRedCap mobile station. Here, PDSCH may include, for example, broadcast PDSCH commonly transmitted to a plurality of terminals.

In a cell that supports Rel-18, both an eRedCap terminal and a non-eRedCap terminal may coexist. Thus, for example, broadcast PDSCH is received by both the eRedcap terminal and the non-eRedCap terminal.

The eRedCap has been described, thus far.

In NR Rel-17, for example, "multi-PDSCH scheduling" is supported in Frequency Range 2-2 (e.g., 52 to 71 GHz frequency band, also referred to as FR2-2) (e.g., see NPL 3). In the multi-PDSCHs scheduling, for example, one piece of downlink control information (Downlink Control Indicator (DCI)) allocates PDSCH in a plurality of time resources.

For example, a method for allocating a plurality of resources having different frequency allocation sizes by one DCI has not been studied. Therefore, for example, in a cell in which an eRedCap terminal and a non-eRedCap terminal coexist, it is difficult to allocate broadcast PDSCHs using a plurality of resources having different frequency sizes supported by an eRedCap terminal and a non-eRedCap terminal.

Also, for example, a base station (also referred to as gNB) possibly allocates broadcast PDSCH to one resource whose frequency size is larger than the characteristic of an eRedCap terminal. At this time, a non-eRedCap terminal can receive the broadcast PDSCH, whereas the eRedCap terminal can only receive a part of the frequency resource of the broadcast PDSCH, which possibly deteriorates the reception performance of the eRedCap terminal.

Alternatively, for example, the base station possibly allocates broadcast PDSCH to one resource whose frequency size is equal to or smaller than the characteristic of the eRedCap terminal. At this time, the frequency size of the broadcast PDSCH is smaller than the frequency size that can be supported by the non-eRedCap terminal, which possibly deteriorates the reception performance in the non-eRedCap terminal.

Therefore, in a non-limiting embodiment of the present disclosure, for example, a method for enhancing reception performance of a terminal in a cell in which an eRedCap terminal and a non-eRedCap terminal coexist will be described.

In a non-limiting embodiment of the present disclosure, a terminal (e.g., eRedCap terminal) identifies a resource (hereinafter, referred to as "second resource" or "another resource") having a different frequency allocation size from a resource (hereinafter, referred to as "first resource") scheduled by a control signal (e.g., DCI), and receives or transmits information using the second resource.

[Overview of Communication System]

A communication system according to the present embodiment includes base station 100 and terminal 200. Terminal 200 may be, for example, an eRedCap terminal.

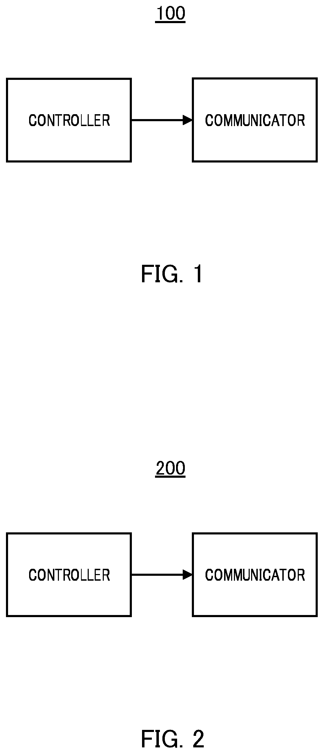

FIG. 1 is a block diagram illustrating an exemplary configuration of a part of base station 100 according to the present embodiment. In base station 100 illustrated in FIG. 1, a controller (e.g., corresponding to control circuitry) determines a first resource scheduled by a control signal (e.g., DCI) and a second resource having a frequency allocation size different from the frequency allocation size of the first resource. A communicator (e.g., corresponding to communication circuitry) transmits or receives a signal using the second resource.

FIG. 2 is a block diagram illustrating an exemplary configuration of a part of terminal 200 according to the present embodiment. In terminal 200 illustrated in FIG. 2, a controller (e.g., corresponding to control circuitry) identifies a second resource having a frequency allocation size different from the frequency allocation size of the first resource scheduled by a control signal (e.g., DCI). A communicator (e.g., corresponding to communication circuitry) transmits or receives a signal using the second resource.

[Configuration of Base Station]

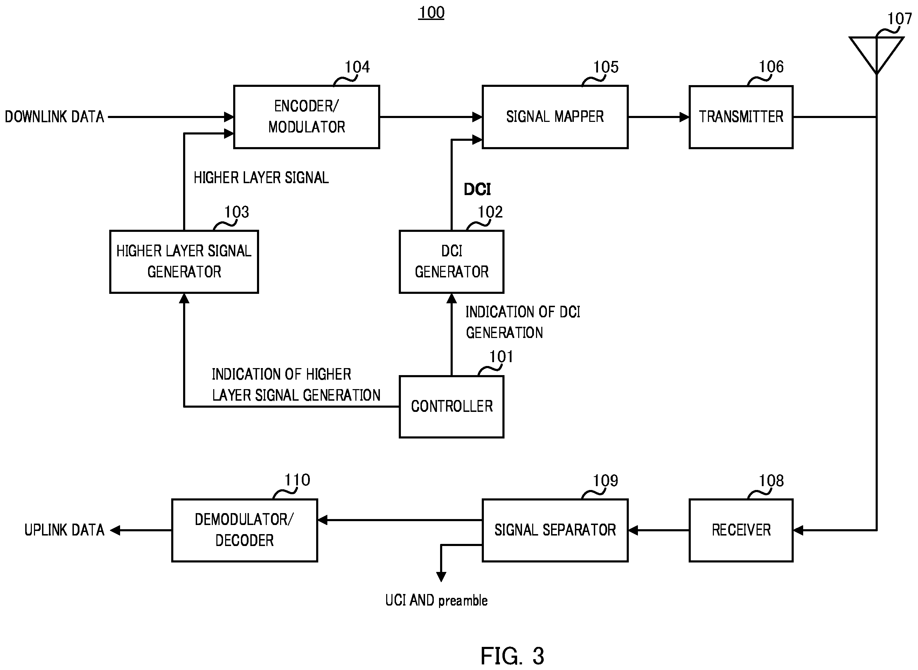

FIG. 3 is a block diagram illustrating an exemplary configuration of base station 100 according to the present embodiment. In FIG. 3, base station 100 includes controller 101, DCI generator 102, higher layer signal generator 103, encoder/modulator 104, signal mapper 105, transmitter 106, antenna 107, receiver 108, signal separator 109, and demodulator/decoder 110.

For example, at least one of controller 101, DCI generator 102, higher layer signal generator 103, encoder/modulator 104, signal mapper 105, signal separator 109, and/or demodulator/decoder 110 illustrated in FIG. 3 may be included in the controller illustrated in FIG. 1. Further, for example, at least one of transmitter 106, antenna 107, and receiver 108 illustrated in FIG. 3 may be included in the communicator illustrated in FIG. 1.

Controller 101 may, for example, determine resources (e.g., including first resource and second resource) to be allocated for terminal 200. Controller 101 may indicate, to higher layer signal generator 103, generation of a higher layer signal (e.g., also referred to as higher layer parameter or higher layer signaling), based on information on the determined resource. Controller 101 may also indicate, to DCI generator 102, generation of control information (e.g., DCI) to be included in a downlink control channel (e.g., PDCCH), based on the information on the determined resource, for example.

For example, DCI generator 102 may generate DCI based on the indication from controller 101 and output the generated DCI to signal mapper 105.

Higher layer signal generator 103 may generate a higher layer signal such as system information based on the indication from controller 101 and output the generated higher layer signal to encoder/modulator 104, for example.

Encoder/modulator 104 may, for example, perform error correction coding and modulation on downlink data and the higher layer signal input from higher layer signal generator 103, and output the modulated signal to signal mapper 105.

For example, signal mapper 105 may map the DCI input from DCI generator 102 and the signal input from encoder/modulator 104 to resources. For example, signal mapper 105 may map the signal input from encoder/modulator 104 to a PDSCH resource and map the DCI to a downlink control channel (e.g., Physical Downlink Control Channel (PDCCH)) resource. Signal mapper 105 outputs the signal mapped to each resource to transmitter 106.

For example, transmitter 106 performs radio transmission processing including frequency conversion (e.g., up-conversion) using a carrier wave on the signal input from signal mapper 105, and outputs the signal after the radio transmission processing to antenna 107.

Antenna 107 radiates the signal (e.g., downlink signal) input from transmitter 106 toward terminal 200, for example. Further, antenna 107 receives an uplink signal transmitted from terminal 200, and outputs the uplink signal to receiver 108, for example.

The uplink signal may be, for example, a signal of a channel such as an uplink data channel (e.g., PUSCH), uplink control channel (e.g., Physical Uplink Control Channel (PUCCH)), or random access channel (e.g., Physical Random Access Channel (PRACH)).

For example, receiver 108 performs radio reception processing including frequency conversion (e.g., down-conversion) on the signal input from antenna 107, and outputs the signal after the radio reception processing to signal separator 109.

Signal separator 109 extracts (in other words, separates) a signal on a PUCCH resource (e.g., UCI) and a signal on PRACH (e.g., preamble) from signals input from receiver 108. Further, signal separator 109 outputs, from signals input from receiver 108, a signal on a PUSCH resource to demodulator/decoder 110.

For example, demodulator/decoder 110 demodulates and decodes the signal input from signal separator 109, and outputs uplink data.

[Configuration of Terminal]

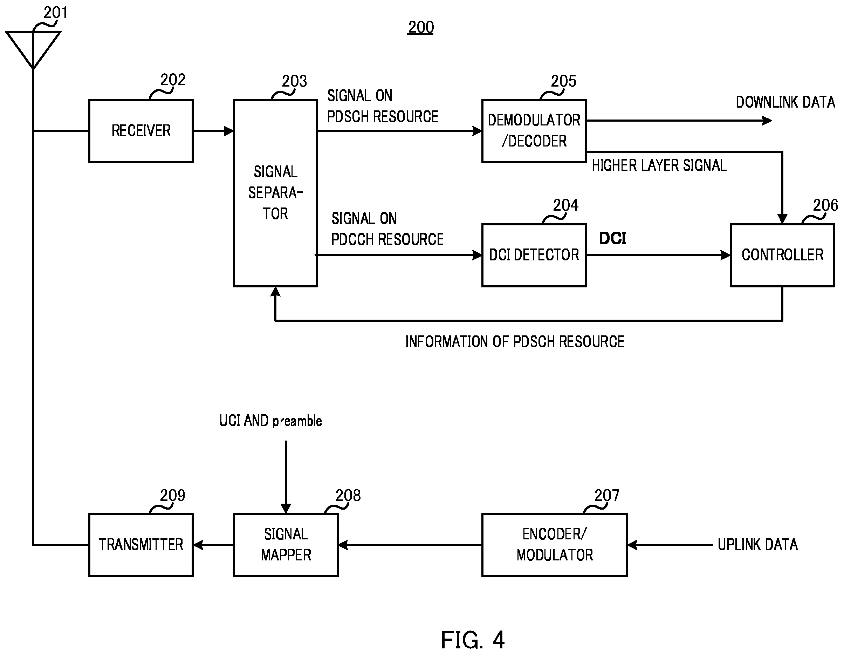

FIG. 4 is a block diagram illustrating an exemplary configuration of terminal 200 according to the present embodiment.

In FIG. 4, terminal 200 includes antenna 201, receiver 202, signal separator 203, DCI detector 204, demodulator/decoder 205, controller 206, encoder/modulator 207, signal mapper 208, and transmitter 209.

For example, at least one of signal separator 203, DCI detector 204, demodulator/decoder 205, controller 206, encoder/modulator 207, and/or signal mapper 208 illustrated in FIG. 4 may be included in the controller illustrated in FIG. 2. Further, for example, at least one of antenna 201, receiver 202, and transmitter 209 illustrated in FIG. 4 may be included in the communicator illustrated in FIG. 2.

Antenna 201 receives a downlink signal transmitted by base station 100, and outputs the downlink signal to receiver 202. In addition, antenna 201 radiates an uplink signal input from transmitter 209 to base station 100.

For example, receiver 202 performs radio reception processing including frequency conversion (e.g., down-conversion) on the signal input from antenna 201, and outputs the signal after the radio reception processing to signal separator 203.

Signal separator 203 extracts (in other words, separates) a signal on a PDCCH resource from signals input from receiver 202 and outputs the signal to DCI detector 204, for example. Further, signal separator 203 outputs, from signals input from receiver 202, a signal on a PDSCH resource to demodulator/decoder 205, based on the indication from controller 206.

For example, DCI detector 204 may detect DCI from the signal (e.g., signal on PDCCH resource) input from signal separator 203. DCI detector 204 may output the detected DCI to controller 206, for example.

For example, demodulator/decoder 205 performs demodulation and error correction decoding on the signal (e.g., signal on PDSCH resource) input from signal separator 203, and obtain at least one of downlink data and a higher layer signal such as system information. For example, demodulator/decoder 205 may output the higher layer signal obtained by decoding to controller 206. Further, demodulator/decoder 205 may output the downlink data obtained by decoding, for example.

For example, controller 206 may determine (or identify) a PDSCH resource based on at least one of DCI input from DCI detector 204 and a higher layer signal (e.g., system information) input from demodulator/decoder 205. For example, controller 206 may transmit (e.g., indicate) information on the identified PDSCH resource to signal separator 203.

Encoder/modulator 207 may, for example, encode and modulate uplink data (e.g., PUSCH) and output the modulated signal to signal mapper 208.

Signal mapper 208 may, for example, map the signal input from encoder/modulator 207 on a PUSCH resource. Further, for example, signal mapper 208 may map UCI on a PUCCH resource. Furthermore, for example, signal mapper 208 may map a preamble on a PRACH resource. Signal mapper 208 outputs the signal mapped to each resource to transmitter 209.

Transmitter 209 performs radio transmission processing including frequency conversion (e.g., up-conversion) on the signal input from signal mapper 208, and outputs the signal after the radio transmission processing to antenna 201, for example.

[Exemplary Operation of Base Station 100 and Terminal 200]

Next, an exemplary operation of base station 100 and terminal 200 described above will be described.

[Operation Example 1]

In Operation Example 1, regarding a first resource scheduled by DCI and a second resource having a different frequency allocation size from the first resource, the number of RBs allocated to the second resource is less than the number of RBs allocated to the first resource.

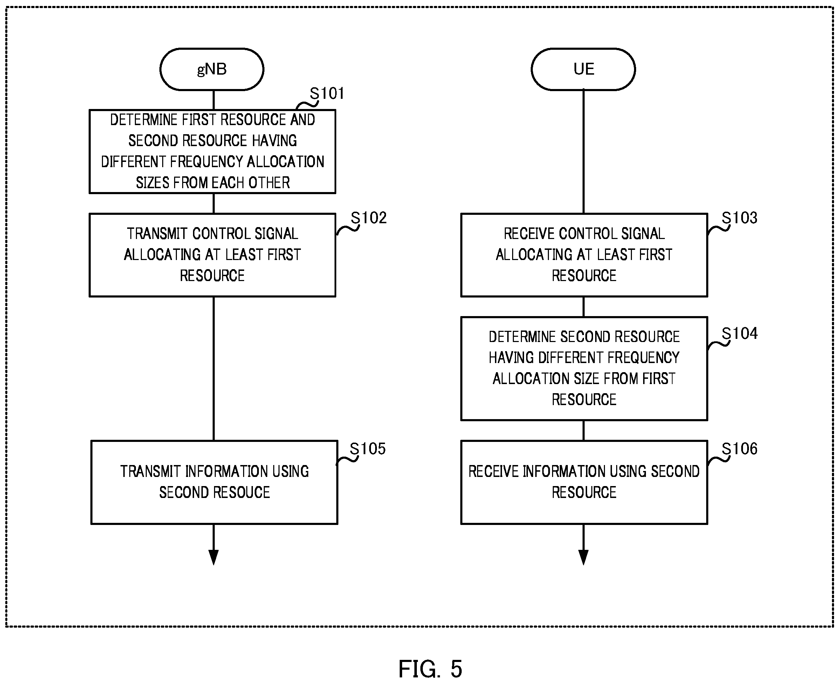

FIG. 5 is a sequence diagram illustrating exemplary processing performed by base station 100 (e.g., gNB) and terminal 200 (e.g., UE).

<S101>

Base station 100 determines, for example, a first resource and a second resource. At this time, base station 100 may configure different frequency allocation sizes (e.g., the number of RBs) for the first resource and the second resource. For example, the number of RBs for the second resource may be less than the number of RBs for the first resource.

For example, the first resource and the second resource may be resources for broadcast PDSCH.

<S102/S103>

For example, base station 100 may transmit, to terminal 200 (e.g., eRedCap terminal), a control signal (e.g., DCI) that allocates (or schedules) at least the first resource.

Terminal 200 may receive the control signal (e.g., DCI) from base station 100, for example. Terminal 200 may identify at least the first resource based on the received DCI.

<S104>

Terminal 200 may, for example, identify the second resource having the number of RBs less than that of the first resource. Terminal 200 may identify the second resource based on the received DCI or may identify the second resource based on information different from the received DCI.

For example, terminal 200 (e.g., eRedCap terminal) may determine the number of RBs of the second resource based on a characteristic (performance or capability) of terminal 200. For example, in a case where the maximum number of RBs used for transmission and reception is 25 for SCS 15kHz and 11 for SCS 30kHz as the characteristic of terminal 200 (e.g., eRedCap terminal), terminal 200 may determine the number of RBs of the second resource as 25 for SCS 15kHz and 11 for SCS 30 kHz. Note that the number of RBs of the second resource is not limited to the maximum number of RBs corresponding to the characteristic of terminal 200, and may be configured to be equal to or less than the maximum number of RBs.

Alternatively, for example, terminal 200 (e.g., eRedCap terminal) may determine the number of RBs of the second resource based on information (e.g., the number of RBs) of the first resource. For example, terminal 200 may determine the number of RBs of the second resource according to Equation 1.

[1]

$$(number\ of\ RBs\ of\ second\ resource) = \left\lfloor \frac{(number\ of\ RBs\ of\ first\ resource)}{4} \right\rfloor$$

$$\ldots \text{(Equation 1)}$$

Note that a method for determining the number of RBs of the second resource based on the number of RBs of the first resource is not limited to the method according to Equation 1, and may be based on another equation.

Alternatively, for example, terminal 200 (e.g., eRedCap terminal) may determine the number of RBs of the second resource based on information (e.g., the number of RBs) related to an active Bandwidth Part (BWP) configured for terminal 200. For example, the number of RBs of the second resource may be configured to be the same as the number of RBs of the active BWP configured for terminal 200. Note that the number of RBs of the second resource is not limited to the number of RBs of the active BWP configured for terminal 200, and may be configured to be equal to or less than the number of RBs of the active BWP.

Alternatively, for example, the number of RBs of the second resource may be indicated to terminal 200 (e.g., eRedCap terminal) by a control signal from base station 100, may be preconfigured in terminal 200, or may be predefined in the standard.

Alternatively, for example, the number of RBs of the second resource may be determined based on another parameter (e.g., time domain resource of the second resource) indicated to terminal 200 (e.g., eRedCap terminal) by a control signal from base station 100.

Alternatively, the number of RBs of the second resource may be determined by a combination of the above-described methods.

<S105/S106>

Base station 100 transmits information addressed to terminal 200 (e.g., eRedCap terminal) using the determined second resource.

Terminal 200 (eRedCap terminal), for example, receives the information addressed to terminal 200 using the identified second resource.

By Operation Example 1, terminal 200 (e.g., eRedCap terminal) can receive a signal (e.g., broadcast PDSCH) using the second resource with the number of RBs suitable for the characteristic of terminal 200. This suppresses, in a cell in which an eRedCap terminal and a non-eRedCap terminal coexist, deterioration of reception performance in the eRedCap terminal.

Further, for example, a non-eRedCap terminal can receive a signal (e.g., broadcast PDSCH) using the first resource indicated by DCI. Thus, for example, a non-eRedCap terminal that receives broadcast PDSCH using the first resource can receive broadcast PDSCH without being affected by the frequency allocation for the eRedCap terminal.

Note that the mapping of RBs in the second resource may be continuous in frequency or discontinuous in frequency. For example, in a case where the RB mapping in the second resource is discontinuous mapping in frequency, the frequency bandwidth of the second resource (e.g., frequency range from the lowest RB to the highest RB) may be equal to or wider than the frequency bandwidth of the first resource.

For example, in a case where the RB mapping in the second resource is continuous mapping in frequency, resource allocation for another terminal (e.g., non-eRedCap terminal) different from terminal 200 is less likely to be affected. Further, in a case where the RB mapping in the second resource is discontinuous mapping in frequency, flexible resource allocation for terminal 200 (e.g., eRedCap terminal) is enabled.

<Operation Example 2>

In Operation Example 2, regarding a first resource scheduled by DCI and a second resource having a different frequency allocation size from the first resource, a frequency bandwidth allocated to the second resource is shorter than the frequency bandwidth allocated to the first resource.

The sequence diagram illustrating an exemplary processing of base station 100 and terminal 200 according to Operation Example 2 may be the same as that of Operation Example 1 (e.g., FIG. 5).

<S101>

Base station 100 determines, for example, a first resource and a second resource. At this time, base station 100 may configure different frequency allocation sizes (e.g., frequency bandwidth) for the first resource and the second resource. For example, the frequency bandwidth corresponding to the second resource may be narrower than the frequency bandwidth corresponding to the first resource.

For example, the first resource and the second resource may be resources for broadcast PDSCH.

<S102/S103>

For example, base station 100 may transmit, to terminal 200 (e.g., eRedCap terminal), a control signal (e.g., DCI) that allocates (or schedules) at least the first resource.

Terminal 200 may receive the control signal (e.g., DCI) from base station 100, for example. Terminal 200 may identify at least the first resource based on the received DCI.

<S104>

Terminal 200 may, for example, identify the second resource having a narrower frequency bandwidth than the first resource. Terminal 200 may identify the second resource based on the received DCI or may identify the second resource based on information different from the received DCI.

For example, terminal 200 (e.g., eRedCap terminal) may determine the frequency bandwidth of the second resource based on the characteristic (performance or capability) of terminal 200. For example, in a case where the maximum value of the frequency bandwidth used for transmission and reception is 5 MHz as the characteristic of terminal 200 (e.g., eRedCap terminal), terminal 200 may determine the frequency bandwidth of the second resource as 5 MHz. Note that the frequency bandwidth of the second resource is not limited to being set to the maximum value of the frequency bandwidth corresponding to the characteristic of terminal 200, and may be set to the value equal to or less than the maximum value of the frequency bandwidth.

Alternatively, for example, terminal 200 (e.g., eRedCap terminal) may determine the frequency bandwidth of the second resource based on information (e.g., frequency bandwidth) on the first resource. For example, terminal 200 may determine the frequency bandwidth of the second resource according to Equation 2.

[2]

$$(frequency\ bandwidth\ of\ second\ resource) = \frac{(frequency\ bandwidth\ of\ first\ resource)}{4}$$

$$\ldots \text{(Equation 2)}$$

Note that a method for determining the frequency bandwidth of the second resource based on the frequency bandwidth of the first resource is not limited to the method according to Equation 2, and may be based on another equation.

Alternatively, for example, terminal 200 (e.g., eRedCap terminal) may determine the frequency bandwidth of the second resource based on the information (e.g., frequency bandwidth) on an active Bandwidth Part (BWP) configured for terminal 200. For example, the frequency bandwidth of the second resource may be configured to be the same as the frequency bandwidth of the active BWP configured for terminal 200. Note that the frequency bandwidth of the second resource is not limited to the frequency bandwidth of the active BWP configured for terminal 200, and may be configured to be equal to or less than the frequency bandwidth of the active BWP.

Alternatively, for example, the frequency bandwidth of the second resource may be indicated to terminal 200 (e.g., eRedCap terminal) by a control signal from base station 100, may be preconfigured in terminal 200, or may be predefined in the standard.

Alternatively, for example, the frequency bandwidth of the second resource may be determined based on another parameter (e.g., time domain resource of the second resource) indicated to terminal 200 (e.g., eRedCap terminal) by a control signal from base station 100.

Alternatively, the frequency bandwidth of the second resource may be determined by a combination of the above-described methods.

<S105/S106>

Base station 100 transmits information addressed to terminal 200 (e.g., eRedCap terminal) using the determined second resource.

Terminal 200 (eRedCap terminal), for example, receives the information addressed to terminal 200 using the identified second resource.

By Operation Example 2, terminal 200 (e.g., eRedCap terminal) can receive a signal (e.g., broadcast PDSCH) using the second resource with the frequency bandwidth suitable for the characteristic of terminal 200. This suppresses, in a cell in which an eRedCap terminal and a non-eRedCap terminal coexist, deterioration of reception performance in the eRedCap terminal.

Further, for example, a non-eRedCap terminal can receive broadcast PDSCH using the first resource indicated by DCI. Thus, for example, a non-eRedCap terminal that receives broadcast PDSCH using the first resource can receive broadcast PDSCH without being affected by the frequency allocation for the eRedCap terminal.

It should be noted that, in Operation Example 2, the number of RBs not exceeding the determined or specified frequency bandwidth may be included in the second resource. For example, a maximum number of RBs within a range not exceeding the frequency bandwidth may be included in the second resource. Further, the RB mapping may be continuous or discontinuous in frequency.

The exemplary operation of base station 100 and terminal 200 has been described above.

As described above, in the present embodiment, base station 100 determines a first resource scheduled by DCI and a second resource having a frequency allocation size different from the frequency allocation size of the first resource, and transmits or receives a signal using the second resource. Further, terminal 200 identifies the second resource having a frequency allocation size different from the frequency assignment size of the first resource scheduled by DCI, and receives or transmits a signal using the second resource.

In this way, base station 100 can allocate a plurality of resources having different frequency allocation sizes by one DCI, for example. Therefore, for example, in a cell in which an eRedCap terminal and a non-eRedCap terminal coexist, it is possible to allocate broadcast PDSCHs using a plurality of resources having different frequency sizes respectively supported by an eRedCap terminal and a non-eRedCap terminal.

Further, for example, broadcast PDSCHs can be allocated to resources that respectively correspond to the characteristics of the non-eRedCap terminal and the eRedCap terminal, which allows the non-eRedCap terminal and the eRedCap terminal to appropriately receive the broadcast PDSCHs and to improve reception performance in the non-eRedCap terminal and the eRedCap terminal.

(Other Embodiments)

(Frequency Allocation Size)

In the above embodiment, the frequency allocation size (e.g., the number of RBs or the frequency bandwidth) of the second resource is smaller than the frequency allocation size of the first resource, the eRedCap terminal receives broadcast PDSCH using the second resource, and the non-eRedCap terminal receives broadcast PDSCH using the first resource, but another method may be applied.

For example, the frequency allocation size of the second resource may be larger than the frequency allocation size of the first resource. Also, for example, an eRedCap terminal may receive broadcast PDSCH using the first resource, and a non-eRedCap terminal may receive broadcast PDSCH using the second resource.

(Regarding Broadcast)

In the above embodiment, a case has been described where a terminal (e.g., eRedCap terminal or non-eRedCap terminal) receives broadcast PDSCH.

Here, broadcast PDSCH may be a signal or channel that transmits the same data (or Transport Block (TB), Codeword (CW)) to a plurality of terminals. For example, the data transmitted in the first resource and the second resource may be the same.

Broadcast PDSCH may transmit, for example, system information (SI), paging, Message 2, Message B, or another information to a plurality of terminals.

Further, DCI allocating broadcast PDSCH may be scrambled by, for example, an SI-RNTI (Radio Network Temporary Identifier) or P-RNTI, RA-RNTI. This suppresses deterioration of reception performance in reception of SI, paging, Message 2, Message B or the like.

Note that the first resource and the second resource are not limited to being used for a broadcast signal (e.g., broadcast PDSCH), and may be used for, for example, a groupcast or multicast signal. For example, in a sidelink, information (e.g., cast type indicator) indicating which of broadcast and groupcast the cast type is may be included in control information (e.g., Sidelink Control Information (SCI)) for scheduling the first resource. In the case of a sidelink, the first resource and the second resource may be for a Physical Sidelink Shared Channel (PSSCH) or another channel, for example.

(Regarding Conditions for Using Second Resource)

In the above embodiment, terminal 200 (e.g., eRedCap terminal) receives broadcast PDSCH using the second resource, but the reception method is not limited thereto.

For example, terminal 200 may use the second resource when a certain condition is satisfied. Note that, in this case, terminal 200 may be an eRedCap terminal or a non-eRedCap terminal.

For example, in a case where the frequency allocation size of the first resource is larger than the frequency size based on the information on terminal 200 (e.g., the number of RBs or the frequency bandwidth used by terminal 200 for transmission and reception), terminal 200 may receive or transmit a signal using the second resource.

Alternatively, for example, in a case where the frequency allocation size of the first resource is larger than the number of RBs or the frequency bandwidth of an active BWP configured for terminal 200, terminal 200 may receive or transmit a signal using the second resource.

In this way, not only the eRedCap terminal but also the non-eRedCap terminal can appropriately transmit and receive signals using the second resource.

(Identification of Frequency Position)

In the above embodiment, terminal 200 may identify the frequency position of the second resource based on a certain method.

For example, the RB index of the second resource (e.g., index of the lowest RB, the highest RB, or RB in the central position) may be configured based on the RB index of the first resource (e.g., index of the lowest RB, the highest RB, or RB in the central position).

For example, terminal 200 may identify that the index of the lowest RB, the highest RB, or the RB in the central position among the RBs of the second resource is the same as the index of the lowest RB, the highest RB, or the RB in the central position among the RBs of the first resource. This eliminates the need of a control signal indicating the frequency position of the second resource.

Further, for example, terminal 200 may identify the RB index of the second resource by using the RB index and the offset of the first resource. The offset may be indicated to terminal 200 by a control signal, may be preconfigured in terminal 200, or may be defined in the standard.

Alternatively, the index of the lowest RB, the highest RB, or the RB in the central position among the RBs of the second resource may be indicated to terminal 200 by a control signal, may be preconfigured in terminal 200, or may be defined in the standard.

Alternatively, the index of the lowest RB, the highest RB, or the RB in the central position among the RBs of the second resource may be identified by the combination of the above-described methods.

(Identification of Temporal Position)

In the above embodiment, terminal 200 may identify the temporal position (time resource) of the second resource based on a certain method.

For example, the time resource of the second resource may be the same as or overlap with the time resource of the first resource. For example, the index of the first symbol of the second resource may be the same as the index of the first symbol of the first resource. This eliminates the need of a control signal indicating the temporal position of the second resource. Note that, the symbol of the second resource identified based on the first resource is not limited to the first symbol, and may be another symbol. Similarly, the symbol of the first symbol used for identifying the temporal position of the second resource is not limited to the first symbol, and may be another symbol.

Alternatively, for example, the time resource of the second resource may be different from the time resource of the first resource. This avoids the collision of the first resource and the second resource with each other, thereby reducing the probability of interference of resources with each other. At this time, the time resource of the second resource may be indicated by a control signal, may be preconfigured in terminal 200, or may be defined in the standard.

Alternatively, the temporal position of the second resource may be configured after or before the temporal position of the first resource by N slots or N symbols.

At this time, the value of N may be indicated to terminal 200 by a control signal, may be preconfigured in terminal 200, or may be defined in the standard.

The value of N may be the number of slots counted based on consecutive slots, or the number of slots counted based on available slots for transmission and reception in the second resource. For example, the "available slots" may be slots not including a slot including Synchronization Signal (SS) /PBCH Block (SSB) and a slot whose uplink/downlink transmission direction is reversed. Configuring the value of N based on the available slots avoids collision of a signal transmitted and received by terminal 200 in the second resource with the signals of SSB and the signals whose uplink/downlink transmission direction is reversed, which reduces the probability of interference of signals with each other.

(Configuration of time length)

In the above embodiment, terminal 200 may identify the time length of the second resource based on a certain method.

For example, the time length of the second resource may be configured as M slots or M symbols.

For example, the value of M may be determined based on the time length of the first resource. For example, the value of M may be the same as the time length of the first resource or may be different from the time length of the first resource. For example, the value of M may be twice, four times, 1/2, 1/4, or another multiple of the time length of the first resource.

Alternatively, for example, information on M (e.g., information used for identifying M) may be indicated to terminal 200 by a control signal, may be preconfigured in terminal 200, or may be defined in the standard.

For example, the time length of the second resource becomes longer as the value of M is higher, and reception performance in reception using the second resource is enhanced. Further, the time length of the second resource becomes shorter as the value of M is lower, and overheard by the second resource can be reduced.

Further, in the above described embodiment, terminal 200 may identify the number of times of temporal repetitions of the second resource based on a certain method, for example. The number of repetitions may be indicated to terminal 200 by a control signal, may be preconfigured in terminal 200, or may be defined in the standard. The reception performance in reception using the second resource is better enhanced as the number of repetitions is increased. Further, the overhead by the second resource can be reduced as the number of repetitions is decreased.

Note that the time resource used for repetitive transmission of the second resource may be selected from the "available slots" described above. In other words, terminal 200 may perform repetitive transmission of the second resource using only the "available slots" described above. This avoids collision of a signal transmitted and received by terminal 200 in the second resource with the signals of SSB and the signals whose uplink/downlink transmission direction is reversed, which reduces the probability of interference of signals with each other.

(Signal/Channel Type)

In the above embodiment, broadcast PDSCH is transmitted and received using the first resource and the second resource, but signals or channels transmitted and received using the first resource and the second resource are not limited to broadcast PDSCH, and may be other signals or channels.

For example, a PBCH, Physical Sidelink Broadcast Channel (PSBCH), Physical Sidelink Feedback Channel (PSFCH), PUSCH, PUCCH, PRACH may be transmitted using the first resource and the second resource. This suppresses deterioration of performance in transmission and reception of these channels.

For example, in the above described embodiment, downlink is exemplarily described, but the present disclosure is also applicable to an uplink PUSCH, PUCCH or PRACH. For example, a PUSCH, PUCCH or PRACH may be transmitted in the first resource and the second resource. This suppresses deterioration of performance in transmission and reception of these channels.

Further, for example, PDCCH in the above-described operation examples may be replaced with PUCCH.

Also, a signal or channel transmitted in each of the first resource and the second resource may be the same or vary.

Further, in the above described embodiment, the resource of PDSCH or PUSCH is allocated by PDCCH (e.g., DCI), but the present disclosure is not limited thereto, and the resource may be configured by a higher layer signal.

Further, the above described embodiment can be also applied to PDCCH. For example, PDCCHs may be transmitted in the first resource and the second resource. At this time, for example, the first resource may be indicated to terminal 200 by a control signal other than DCI, may be preconfigured in terminal 200, or may be defined in the standard. In addition, terminal 200 may identify the second resource through some method described in the above embodiments, for example.

(Transmission and Reception Method)

Further, in the above-described embodiment, a terminal (e.g., eRedCap terminal or non-eRedCap terminal) may transmit and receive a signal (e.g., broadcast PDSCH) using the second resource without using the first resource.

Alternatively, the terminal may transmit and receive a signal using both the first resource and the second resource. For example, signal reception performance can be enhanced by synthesizing signals on two resources of the first resource and the second resource.

In addition, at this time, in the resource in which the frequency range overlaps with that of the second resource among the first resources, a signal bit that is not transmitted in the second resource may be transmitted. Accordingly, signal reception performance can be enhanced by synthesizing signals on two resources of the first resource and the second resource.

Further, for example, the same data is transmitted between the second resource and the first resource, but redundancy version (RV) may be different. Terminal 200 can further enhance reception performance by synthesizing signals with different RVs, for example.

In the above-described embodiment, the first resource and the second resource may be code division multiplexed (CDM). This reduces resource overhead.

Further, in the above-described embodiment, an eRedCap terminal receives a signal (e.g., broadcast PDSCH) using the second resource, but the reception method is not limited thereto. For example, an eRedCap terminal may receive broadcast PDSCH using a part of the first resource. In this case, the eRedCap terminal need not use the second resource. At this time, a part of the first resource may be, for example, one or a plurality of RBs, and the RBs, which are the part of the first resource, may be RBs including a large number of bits corresponding to a column including a large number of non-zero elements in the parity matrix in encoding. Accordingly, reception performance in the eRedCap terminal can be enhanced.

At this time, the bits of the first resource may be mapped in a random order using an interleaver or the like. This keeps reception performance constant regardless of RBs received by the eRedCap terminal.

(Another Control Information)

In the above-described embodiment, terminal 200 may identify that another control information related to the second resource and differing from the time frequency resource is the same as the control information on the first resource. Another control information may include, for example, information on another allocation information different from the time frequency resource (e.g., hybrid automatic repeat request (HARQ) and/or information on an antenna port). This makes it possible to omit indication of another control information.

Note that another control information related to the second resource and differing from a time frequency resource may be different from the control information on the first resource. For example, another control information on the second resource may be identified based on the control information on the first resource, and may be indicated from base station 100 to terminal 200.

(Number of Resources)

In the above-described embodiment, the number of second resources is not limited to one, and may be two or more. For example, the second resource having a different frequency allocation size from the first resource may include a plurality of resources, such as resource #1, resource #2, .... This can improve reception performance in a terminal different from an eRedCap terminal and a non-eRedCap terminal.

Further, in the above-described embodiment, the number of first resources scheduled by a control signal is not limited to one, and may be two or more. Terminal 200 may, for example, identify a second resource having a different frequency allocation size from at least one of the plurality of first resources scheduled by a control signal.

(Terminal Type and Identification)

The above-described embodiment may be applied to, for example, an "eRedCap terminal," may be applied to a non-eRedCap terminal, and may be applied to another type of terminal.

Note that, in the above-described embodiment, the characteristic (attribute or capability) of an eRedCap terminal has been described as that the supported maximum frequency allocation size (e.g., frequency bandwidth or the number of RBs) is equal to or smaller than a threshold. However, an eRedCap terminal may be a terminal having at least one of the following characteristics:

(1) A terminal that indicates (e.g., report), to base station 100, that the terminal is "a terminal targeted for coverage enhancement," "a terminal that receives a signal repeatedly transmitted," or "a RedCap terminal." Note that, for the above-described indication (report), an uplink channel such as a PRACH or PUSCH or an uplink signal such as a Sounding Reference Signal (SRS) may be used, for example.

(2) A terminal having at least one of the following capabilities, or a terminal reporting at least one of the following capabilities to base station 100. Note that, for the above-described report, an uplink channel such as a PRACH or PUSCH or an uplink signal such as a UCI or SRS may be used, for example.

- A terminal whose transmittable and receivable frequency bandwidth (e.g., maximum value) is equal to or less than a threshold value (e.g., equal to or less than 5 MHz)
- A terminal whose number of transmittable and receivable RBs (e.g., maximum number) is equal to or less than a threshold value (e.g., equal to or less than 25 or equal to or less than 11)
- A terminal whose number of implemented reception antennae is equal to or less than a threshold value (e.g., threshold = 1)
- A terminal whose number of supportable downlink ports (e.g., the number of reception antenna ports) is equal to or less than a threshold value (e.g., threshold value = 2)
- A terminal whose number of supportable transmission ranks (e.g., the number of maximum Multiple-Input Multiple-Output (MIMO) layers (or the number of ranks)) is equal to or less than a threshold value (e.g., threshold value = 2)
- A terminal capable of transmitting and receiving a signal in a frequency band equal to or less than a threshold value (e.g., Frequency Range 1 (FR1) or a band equal to or less than 6 GHz)
- A terminal whose processing time is equal to or longer than a threshold value
- A terminal whose available transport block size (TBS) is equal to or smaller than a threshold value
- A terminal whose number of available transmission ranks (e.g., the number of MIMO transmission layers) is equal to or less than a threshold value.
- A terminal whose available modulation order is equal to or less than a threshold value
- A terminal whose number of available HARQ processes is equal to or less than a threshold value.
- A terminal that supports Rel-18 or a later release.

(3) A terminal to which a parameter supporting an eRedCap terminal is indicated from base station 100. Note that the parameter supporting an eRedCap terminal may include, for example, a parameter such as Subscriber Profile ID for RAT/Frequency Priority (SPID).

Note that the term "non-eRedCap terminal" may mean, for example, a terminal that supports Rel-15/16/17 (e.g., terminal that does not support Rel-18) or a terminal that supports Rel-18 but does not have the above-described characteristics.

(Supplement)

Information indicating whether terminal 200 supports the functions, operations, or processes described in the above-described embodiments may be transmitted (or indicated) from terminal 200 to base station 100 as capability information or a capability parameter of terminal 200.

The capability information may include an information element (IE) individually indicating whether terminal 200 supports at least one of the functions, operations, or processes described in the above-described embodiments. Alternatively, the capability information may include an information element indicating whether terminal 200 supports a combination of any two or more of the functions, operations, or processes described in the above-described embodiments, modifications, and supplements.

Base station 100 may determine (or assume) the function, operation, or process supported (or not supported) by terminal 200 of the transmission source of the capability information, based on the capability information received from terminal 200, for example. Base station 100 may perform an operation, processing, or control according to a determination result based on the capability information. For example, base station 100 may control a frequency resource to be assigned to the terminal based on the capability information received from terminal 200.

Note that the fact that terminal 200 does not support some of the functions, operations, or processes described in the above-described embodiments may be read as that some of the functions, operations, or processes are limited in terminal 200. For example, information or a request on such limitation may be indicated to base station 100.

Information on the capability or limitation of terminal 200 may be defined, for example, in the standard, or may be implicitly indicated to base station 100 in association with information known to base station 100 or information transmitted to base station 100.

(Control Signal)

In the present disclosure, the downlink control signal (or downlink control information) relating to the exemplary embodiment of the present disclosure may be a signal (or information) transmitted in a Physical Downlink Control Channel (PDCCH) in a physical layer, for example, or may be a signal (or information) transmitted in a Medium Access Control Control Element (MAC CE) or Radio Resource Control (RRC) in a higher layer. Further, the signal (or information) is not limited to that indicated by the downlink control signal, but may be predefined in the specifications (or standard) or may be pre-configured for the base station and the terminal.

Furthermore, the PDCCH may be transmitted, for example, in either Common Search Space (CSS) or UE Specific Search Space (USS).

(Base Station)

In the above embodiments, the base station may be a transmission reception point (TRP), a clusterhead, an access point, a remote radio head (RRH), an eNodeB (eNB), a gNodeB (gNB), a base station (BS), a base transceiver station (BTS), a base unit, or a gateway, for example. Further, in side link communication, a terminal may play a role of a base station. Furthermore, instead of the base station, a relay apparatus that relays communication between a higher node and a terminal may be used. Moreover, a road side device may be used.

(Uplink/Downlink/Sidelink)

An exemplary embodiment of the present disclosure may be applied to, for example, any of an uplink, a downlink, and a sidelink. For example, an exemplary embodiment of the present disclosure may be applied to an uplink Physical Uplink Shared Channel (PUSCH), Physical Uplink Control Channel (PUCCH), or Physical Random Access Channel (PRACH), a downlink Physical Downlink Shared Channel (PDSCH), PDCCH, or Physical Broadcast Channel (PBCH), or a sidelink Physical Sidelink Shared Channel (PSSCH), Physical Sidelink Control Channel (PSCCH), or Physical Sidelink Broadcast Channel (PSBCH).

Note that the PDCCH, the PDSCH, the PUSCH, and the PUCCH are examples of a downlink control channel, a downlink data channel, an uplink data channel, and an uplink control channel, respectively. Further, the PSCCH and the PSSCH are examples of a side link control channel and a side link data channel, respectively. Further, the PBCH and the PSBCH are examples of broadcast channels, and the PRACH is an example of a random access channel.

(Data Channel/Control Channel)

An exemplary embodiment of the present disclosure may be applied to, for example, any of a data channel and a control channel. For example, a channel in an exemplary embodiment of the present disclosure may be replaced with any one of the PDSCH, the PUSCH, and the PSSCH being the data channels, or the PDCCH, the PUCCH, the PBCH, the PSCCH, and the PSBCH being the control channels.

(Reference Signal)

In an embodiment of the present disclosure, a reference signal is a signal known to both of a base station and a terminal, and may also be referred to as a Reference Signal (RS) or a pilot signal. The reference signal may be any of a Demodulation Reference Signal (DMRS), a Channel State Information-Reference Signal (CSI-RS), a Tracking Reference Signal (TRS), a Phase Tracking Reference Signal (PTRS), a Cell-specific Reference Signal (CRS), or a Sounding Reference Signal (SRS).

(Time Intervals)

In an embodiment of the present disclosure, a time resource unit is not limited to one or a combination of slots and symbols, and may be a time resource unit, such as a frame, superframe, subframe, slot, time slot subslot, minislot, or a time resource unit, such as a symbol, orthogonal frequency division multiplexing (OFDM) symbol, single carrier-frequency division multiplexing access (SC-FDMA) symbol, or another time resource unit. The number of symbols included in one slot is not limited to the number of symbols exemplified in the above-described embodiments, and may be another number of symbols.

(Frequency Band)

An exemplary embodiment of the present disclosure may be applied to any of a licensed band or an unlicensed band (unlicensed spectrum, shared spectrum). In a case of an unlicensed band, a channel access procedure (Listen Before Talk (LBT), carrier sense, and/or Channel Clear Assessment (CCA)) may be performed prior to transmission of each signal.

(Communication)

An exemplary embodiment of the present disclosure may be applied to any of communication between a base station and a terminal (Uu link communication), communication between a terminal and a terminal (Sidelink communication), and communication of a Vehicle to Everything (V2X). For example, the PDCCH in an embodiment of the present disclosure may be replaced with PSCCH, the PUSCH/PDSCH may be replaced with PSSCH, the PUCCH may be replaced with Physical Sidelink Feedback Channel (PSFCH), and the PBCH may be replaced with PSBCH.
Further, an embodiment of the present disclosure may be applied to any of a terrestrial network or a network (Non-Terrestrial Network (NTN)) other than a terrestrial network using a satellite or a High Altitude Pseudo Satellite (HAPS). Further, an exemplary embodiment of the present disclosure may be applied to a network having a large cell size, and a terrestrial network with a large delay compared with a symbol length or a slot length, such as an ultra-wideband transmission network.

(Antenna Port)

In an exemplary embodiment of the present disclosure, an antenna port refers to a logical antenna (antenna group) formed of one or more physical antenna(s). For example, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

<5G NR System Architecture and Protocol Stacks>

The 3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of terminals (e.g., smartphones).

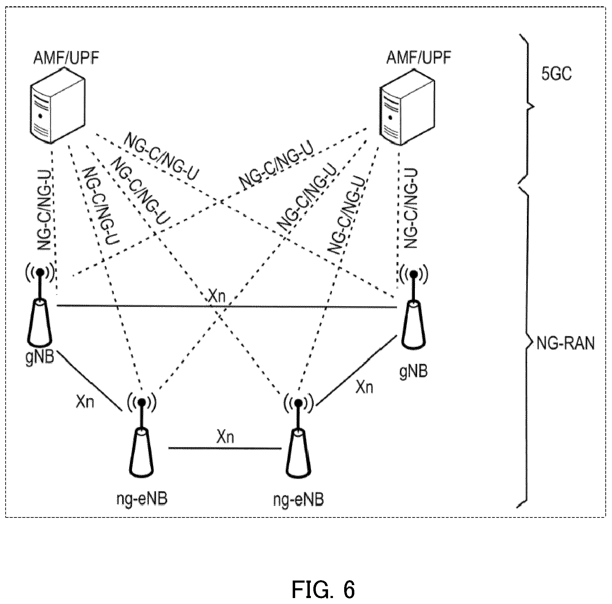

For example, the overall system architecture assumes an NG-RAN (Next Generation-Radio Access Network) that includes gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 6 (see e.g., 3GPP TS 38.300 v15.6.0, section 4).

The user plane protocol stack for NR (see, e.g., 3GPP TS 38.300, section 4.4.1) includes the Packet Data Convergence Protocol (PDCP, see clause 6.4 of TS 38.300) Radio Link Control (RLC, see clause 6.3 of TS 38.300) and Medium Access Control (MAC, see clause 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., clause 6.5 of 3GPP TS 38.300). A control plane protocol stack is also defined for NR (see for instance TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For instance, the Medium Access Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For example, the physical channels include a Physical Random Access Channel (PRACH), Physical Uplink Shared Channel (PUSCH), and Physical Uplink Control Channel (PUCCH) as uplink physical channels, and a Physical Downlink Shared Channel (PDSCH), Physical Downlink Control Channel (PDCCH), and Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates on the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, the mMTC may preferably require high connection density (1,000,000 devices/$km^2$ in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacings of 15 kHz, 30 kHz, and 60 kHz, ... are being considered at the moment. The symbol duration Tu and the subcarrier spacing $\Delta f$ are directly related through the formula $\Delta f = 1/Tu$. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0).

<Functional Split between NG-RAN and 5GC in 5G NR>

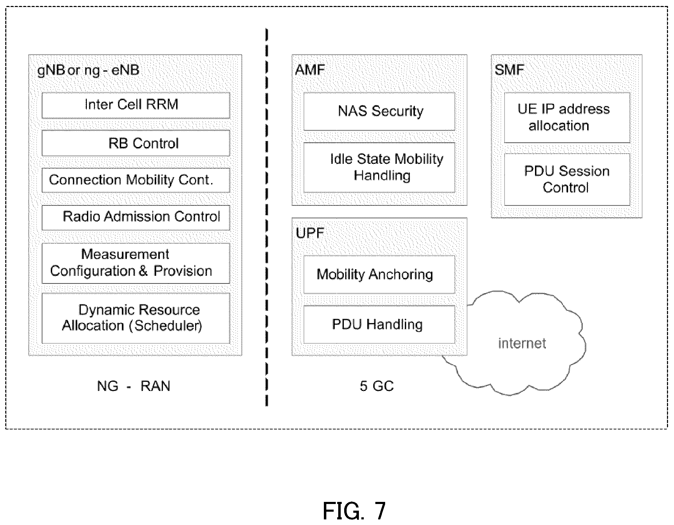

FIG. 7 illustrates functional split between NG-RAN and 5GC. A logical node of the NG-RAN is gNB or ng-eNB. The 5GC includes logical nodes AMF, UPF, and SMF.

For example, gNB and ng-eNB host the following main functions:

- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of user plane data towards UPF(s);
- Routing of control plane information towards AMF;
- Connection setup and release;
- Scheduling and transmission of paging messages;
- Scheduling and transmission of system broadcast information (originated from the AMF or Operation, Admission, Maintenance (OAM));
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:

- Function of Non-Access Stratum (NAS) signaling termination;
- NAS signaling security;
- Access Stratum, AS, Security control;
- Inter-Core Network (CN) node signaling for mobility between 3GPP access networks;
- Idle mode UE Reachability (including control and execution of paging retransmission);
- Registration area management;
- Support of intra-system and inter-system mobility;
- Access Authentication;
- Access Authorization including check of roaming rights;
- Mobility management control (subscription and policies);
- Support of Network Slicing;
- Session Management Function (SMF) selection

In addition, the User Plane Function (UPF) hosts the following main functions:

- Anchor point for Intra-/Inter-RAT mobility (when applicable);
- External Protocol Data Unit (PDU) session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g., packet filtering, gating, UL/DL rate enforcement;
- Uplink Traffic verification (SDF to QoS flow mapping);
- Downlink packet buffering and downlink data notification triggering.

Finally, the Session Management Function (SMF) hosts the following main functions:

- Session Management;
- UE IP address allocation and management;
- Selection and control of UP function;
- Configuration function for traffic steering at the User Plane Function (UPF) to route traffic to a proper destination;
- Control part of policy enforcement and QoS; and
- Downlink data indication.

<RRC Connection Setup and Reconfiguration Procedure>

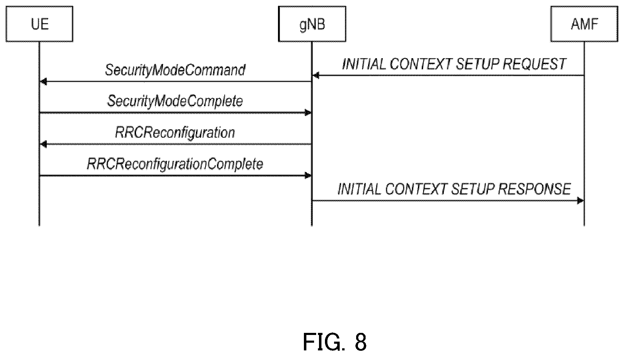

FIG. 8 illustrates some interactions between a UE, gNB, and AMF (a 5GC entity) in the context of a transition of the UE from RRC_IDLE to RRC_CONNECTED for the NAS part (see TS 38.300 v15.6.0).

RRC is higher layer signaling (protocol) used for UE and gNB configuration. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a SecurityMode-Command message and by the UE responding to the gNB using the SecurityModeComplete message. Afterwards, the gNB performs the reconfiguration to setup the Signaling Radio Bearer 2 (SRB2) and Data Radio Bearer(s) (DRB(s)) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB indicates the AMF that the setup procedure is completed with INITIAL CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which in operation, transmits an initial context setup message to the gNodeB via the NG connection such that a signaling radio bearer between the gNodeB and a User Equipment (UE) is set up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

<Usage Scenarios of IMT for 2020 and beyond>

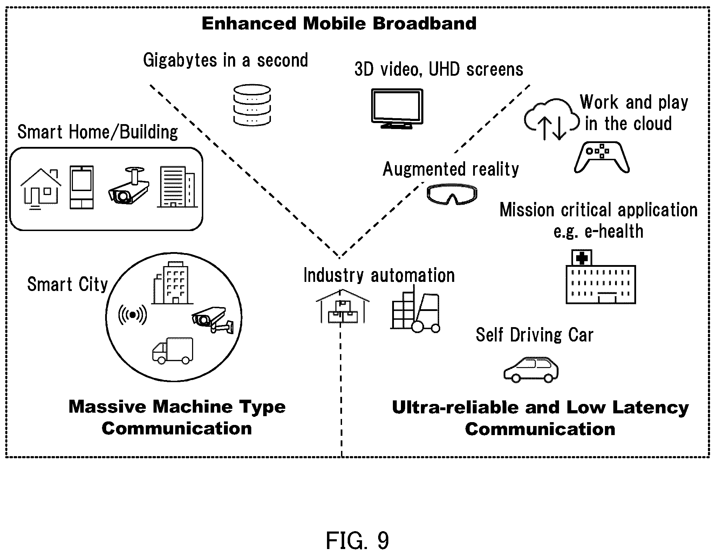

FIG. 9 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 9 illustrates some examples of envisioned usage scenarios for IMT for 2020 and beyond (see, e.g., ITU-R M. 2083 FIG. 2).

The URLLC use case has stringent requirements for capabilities such as throughput, latency and availability. The URLLC use case has been envisioned as one of element techniques to enable future vertical applications such as wireless control of industrial manufacturing or production processes, remote medical surgery, distribution automation in a smart grid, transportation safety, etc. Ultra-reliability for the URLLC is to be supported by identifying the techniques to meet the requirements set by TR 38.913. For NR URLLC in Release 15, key requirements include a target user plane latency of 0.5 ms for uplink (UL) and 0.5 ms for downlink (DL). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for the URLLC, more compact DCI formats, repetition of PDCCH, etc. However, the scope may widen for achieving ultra-reliability as the NR becomes more stable and developed (for NR URLLC key requirements). Particular use cases of NR URLLC in Release 15 include augmented reality/virtual reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. The pre-emption means that a transmission for which resources have already been allocated is stopped, and the already allocated resources are used for another transmission that has been requested later but has lower latency/higher priority requirements. Accordingly, the already granted transmission is replaced with a later transmission. The pre-emption is applicable independent of the particular service type. For example, a transmission for a service-type A (URLLC) may be replaced with a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability improvement in NR becomes wider. One key requirement to all the cases, and especially necessary for the URLLC and mMTC for example, is high reliability or ultra-reliability. Several mechanisms can be considered to improve the reliability from the radio perspective and network perspective. In general, there are a few key important areas that can help improve the reliability. These areas include compact control channel information, data/control channel repetition, and diversity with respect to the frequency, time, and/or spatial domain. These areas are applicable to reliability improvement in general, regardless of particular communication scenarios.

For NR URLLC, further use cases with tighter requirements have been considered such as factory automation, transport industry, and electrical power distribution. The tighter requirements are higher reliability (up to 10-6 level), higher availability, packet size of up to 256 bytes, time synchronization down to the order of a few μs where the value can be one or a few μs depending on frequency range and short latency in the order of 0.5 to 1 ms (e.g., target user plane latency of 0.5 ms) depending on the use cases.

Moreover, for NR URLLC, several technology enhancements from the physical layer perspective have been identified. These technology enhancements include Physical Downlink Control Channel (PDCCH) enhancements related to compact DCI, PDCCH repetition, and increased PDCCH monitoring. In addition, Uplink Control Information (UCI) enhancements are related to enhanced Hybrid Automatic Repeat Request (HARQ) and CSI feedback enhancements. Also, PUSCH enhancements related to mini-slot level hopping and retransmission/repetition enhancements have been identified. The term "mini-slot" refers to a transmission time interval (TTI) including a smaller number of symbols than a slot (a slot includes fourteen symbols).

<QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearer (DRB) together with the PDU session, e.g., as illustrated above with reference to FIG. 8. Further, additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

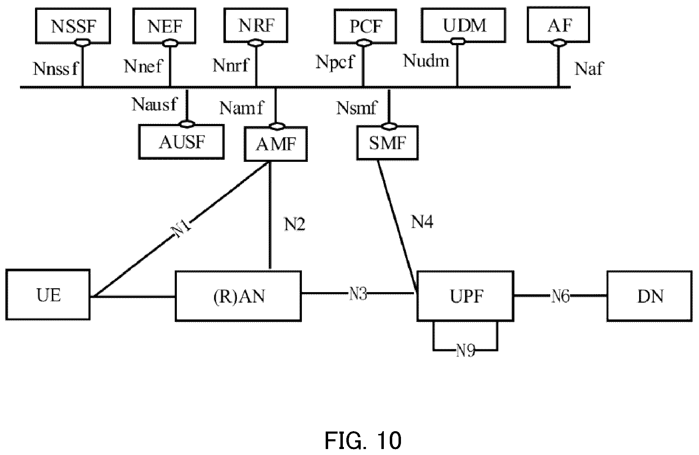

FIG. 10 illustrates a 5G NR non-roaming reference architecture (see TS 23.501 v16.1.0, section 4.23). An Application Function (AF) (e.g., an external application server hosting 5G services, exemplarily described in FIG. 9) interacts with the 3GPP Core Network in order to provide services, for example to support application influencing on traffic routing, accessing Network Exposure Function (NEF) or interacting with the policy framework for policy control (e.g., QoS control) (see Policy Control Function, PCF). Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 10 illustrates further functional units of the 5G architecture, namely a Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or 3rd party services). All of or a part of the core network functions and the application services may be deployed and running on cloud computing environments.

In the present disclosure, thus, an application server (e.g., AF of the 5G architecture), is provided that includes a transmitter, which in operation, transmits a request containing a QoS requirement for at least one of the URLLC, eMMB, and mMTC services to at least one of functions (for example NEF, AMF, SMF, PCF, UPF, etc) of the 5GC to establish a PDU session including a radio bearer between a gNodeB and a UE in accordance with the QoS requirement, and control circuitry, which, in operation, performs the services using the established PDU session.

Any component termed with a suffix, such as "-er," "-or," or "-ar" in the above-described embodiments may be replaced with other terms such as "circuit (circuitry)," "device," "unit," or "module."

Further, in the above-described embodiment, the values of parameters such as the number of RBs, a frequency bandwidth, and SCS are exemplary and may be other values.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas. Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A terminal according to a non-limiting embodiment of the present disclosure includes: control circuitry, which, in operation, identifies a certain resource having a frequency allocation size different from a frequency allocation size of a first resource scheduled by a control signal, the certain resource being referred to as a second resource; and communication circuitry, which, in operation, receives or transmits a signal using the second resource.

In the non-limiting embodiment of the present disclosure, a number of resource blocks corresponding to the second resource is less than a number of resource blocks corresponding to the first resource.

In the non-limiting embodiment of the present disclosure, a frequency bandwidth corresponding to the second resource is narrower than a frequency bandwidth corresponding to the first resource.

In the non-limiting embodiment of the present disclosure, the first resource and the second resource are used for broadcast, groupcast, or multicast.

In the non-limiting embodiment of the present disclosure, in a case where the frequency allocation size of the first resource is larger than a frequency size based on information on the terminal, the communication circuitry receives or transmits the signal using the second resource.

In the non-limiting embodiment of the present disclosure, the control circuitry identifies the second resource based on information on the first resource.

In the non-limiting embodiment of the present disclosure, the control circuitry identifies the second resource based on a capability of the terminal.

In the non-limiting embodiment of the present disclosure, the control circuitry identifies the second resource based on information on a bandwidth part (BWP) configured for the terminal.

A base station according to a non-limiting embodiment of the present disclosure includes: control circuitry, which, in operation, determines a first resource scheduled by a control signal and a second resource having a frequency allocation size different from a frequency allocation size of the first resource; and communication circuitry, which, in operation, receives or transmits a signal using the second resource.

In a communication method according to an non-limitng embodiment of the present disclosure, a terminal identifies a certain resource having a frequency allocation size different from a frequency allocation size of a first resource scheduled by a control signal, the certain resource being referred to as a second resource, and receives or transmits a signal using the second resource.

In a communication method according to an non-limitng embodiment of the present disclosure, a base station determines a first resource scheduled by a control signal and a second resource having a frequency allocation size different from a frequency allocation size of the first resource, and receives or transmits a signal using the second resource.

The disclosure of Japanese Patent Application No. 2022-121612, filed on July 29, 2022, including the specification, drawings and abstract, is incorporated herein by reference in its entirety.

Industrial Applicability

An exemplary embodiment of the present disclosure is useful for radio communication systems.

Reference Signs List

100 Base station
101, 206 Controller
102 DCI generator
103 Higher layer signal generator
104, 207 Encoder/modulator
105, 208 Signal mapper
106, 209 Transmitter
107, 201 Antenna
108, 202 Receiver
109 Signal separator
110, 205 Demodulator/decoder
200 Terminal
203 Signal separator
204 DCI detector

**Claims**

1. A terminal, comprising:

   control circuitry, which, in operation, identifies a certain resource having a frequency allocation size different from a frequency allocation size of a first resource scheduled by a control signal, the certain resource being referred to as a second resource; and
   communication circuitry, which, in operation, receives or transmits a signal using the second resource.

2. The terminal according to claim 1, wherein,
   a number of resource blocks corresponding to the second resource is less than a number of resource blocks corresponding to the first resource.

3. The terminal according to claim 1, wherein
   a frequency bandwidth corresponding to the second resource is narrower than a frequency bandwidth corresponding to the first resource.

4. The terminal according to claim 1, wherein
   the first resource and the second resource are used for broadcast, groupcast, or multicast.

5. The terminal according to claim 1, wherein
   in a case where the frequency allocation size of the first resource is larger than a frequency size based on information on the terminal, the communication circuitry receives or transmits the signal using the second resource.

6. The terminal according to claim 1, wherein
   the control circuitry identifies the second resource based on information on the first resource.

7. The terminal according to claim 1, wherein
   the control circuitry identifies the second resource based on a capability of the terminal.

8. The terminal according to claim 1, wherein

the control circuitry identifies the second resource based on information on a bandwidth part (BWP) configured for the terminal.

9. A base station, comprising:

control circuitry, which, in operation, determines a first resource scheduled by a control signal and a second resource having a frequency allocation size different from a frequency allocation size of the first resource; and communication circuitry, which, in operation, receives or transmits a signal using the second resource.

10. A communication method, comprising:

identifying, by a terminal, a certain resource having a frequency allocation size different from a frequency allocation size of a first resource scheduled by a control signal, the certain resource being referred to as a second resource; and receiving or transmitting, by the terminal, a signal using the second resource.

11. A communication method, comprising:

determining, by a base station, a first resource scheduled by a control signal and a second resource having a frequency allocation size different from a frequency allocation size of the first resource; and receiving or transmitting, by the base station, a signal using the second resource.

100

CONTROLLER → COMMUNICATOR

FIG. 1

200

CONTROLLER → COMMUNICATOR

FIG. 2

FIG. 3

EP 4 564 974 A1

FIG. 4

gNB

UE

DETERMINE FIRST RESOURCE AND
SECOND RESOURCE HAVING
DIFFERENT FREQUENCY ALLOCATION
SIZES FROM EACH OTHER
~S101

TRANSMIT CONTROL SIGNAL
ALLOCATING AT LEAST FIRST
RESOURCE
~S102

RECEIVE CONTROL SIGNAL
ALLOCATING AT LEAST FIRST
RESOURCE
~S103

DETERMINE SECOND RESOURCE
HAVING DIFFERENT FREQUENCY
ALLOCATION SIZE FROM FIRST
RESOURCE
~S104

TRANSMIT INFORMATION USING
SECOND RESOUCE
~S105

RECEIVE INFORMATION USING SECOND
RESOURCE
~S106

FIG. 5

FIG. 6

**gNB or ng - eNB**
- Inter Cell RRM
- RB Control
- Connection Mobility Cont.
- Radio Admission Control
- Measurement Configuration & Provision
- Dynamic Resource Allocation (Scheduler)

NG - RAN

**AMF**
- NAS Security
- Idle State Mobility Handling

**SMF**
- UE IP address allocation
- PDU Session Control

**UPF**
- Mobility Anchoring
- PDU Handling

internet

5 GC

FIG. 7

FIG. 8

**Enhanced Mobile Broadband**

Gigabytes in a second

3D video, UHD screens

Work and play in the cloud

Smart Home/Building

Augmented reality

Mission critical application e.g. e-health

Smart City

Industry automation

Self Driving Car

**Massive Machine Type Communication**

**Ultra-reliable and Low Latency Communication**

FIG. 9

FIG. 10

# EP 4 564 974 A1

## INTERNATIONAL SEARCH REPORT

| International application No. |
| :--- |
| **PCT/JP2023/020233** |

### A. CLASSIFICATION OF SUBJECT MATTER

***H04W 72/0453***(2023.01)i; ***H04W 8/22***(2009.01)i
FI: H04W72/0453; H04W8/22

According to International Patent Classification (IPC) or to both national classification and IPC

### B. FIELDS SEARCHED

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| :---: | :--- | :---: |
| X | NTT DOCOMO, INC. Discussion on potential solutions for further UE complexity reduction. 3GPP TSG RAN WG1 #109-e R1-2204389, 28 April 2022<br>  section 2.1.2.1 | 1-8, 10 |
| X | OPPO. Simulation and evaluation for RedCap enhancement, 3GPP TSG RAN WG1 #109-e R1-2203996, 29 April 2022<br>  section 2.1 | 9, 11 |
| A | MODERATOR (NTT DOCOMO, INC.). FL summary #6 on simulation needs and assumptions for further reduce UE complexity, 3GPP TSG RAN WG1 #109-e R1-2205643, 25 May 2022<br>  section 8 | 9, 11 |
| T | ZTE. Sanechips, Coverage evaluation for eRedCap UE, 3GPP TSG RAN WG1 #110 R1-2207058, 12 August 2022<br>  section 2 | 1-8, 10 |

☐ Further documents are listed in the continuation of Box C.  ☐ See patent family annex.

| | |
| :--- | :--- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| :--- | :--- |
| **28 June 2023** | **11 July 2023** |

| Name and mailing address of the ISA/JP | Authorized officer |
| :--- | :--- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

31

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022121612 A

**Non-patent literature cited in the description**

- **NTT DOCOMO**. Revised WID on New Radio Access Technology. *RP-181726*, September 2018
- **ERICSSON**. New SID on Study on further NR RedCap UE complexity reduction. *RP-213661*, December 2021
- NR; Physical layer procedures for control (Release 17). *3GPP TS 38.214 V17.2.0*, June 2022